# EUROPÄISCHE PATENTANMELDUNG

(11) **EP 3 321 040 A1**
(43) Veröffentlichungstag der Anmeldung: **16.05.2018**
(21) Anmeldenummer: 16197919.0
(22) Anmeldetag: 09.11.2016
(51) Int. Cl.: B25F 5/02

(54) **AKKU-AUFNAHME**

(71) Anmelder: HILTI Aktiengesellschaft, 9494 Schaan (LI)
(72) Erfinder: Königer, Tobias, 6900 Bregenz (AT); Baxivanelis, Konstantin, 86916 Kaufering (DE)
(74) Vertreter: Hilti Aktiengesellschaft Corporate Intellectual Property

(57) **Zusammenfassung**

Vorrichtung (2) zur Aufnahme wenigstens eines Akkumulators (8) an einer Werkzeugmaschine (1), insbesondere eine Kreissäge mit einer Aufnahmeplatte (9) zum wiederlösbaren Halten des wenigstens einen Akkumulators (8) mit wenigstens einer Kontakteinrichtung (11) zum Verbinden des Akkumulators (8) mit der Werkzeugmaschine (1) und einer Doppelscharniereinrichtung (10) mit einer ersten und zweiten Drehachse (A,B), wobei die erste Drehachse (A) an einem Gehäuse (4) der Werkzeugmaschine (1) und die zweite Drehachse (B) an der Aufnahmeplatte (9) positioniert ist, sodass die Aufnahmeplatte (9) um die erste sowie zweite Drehachse (A, B) relativ zu dem Gehäuse (4) reversibel zwischen einer ersten und zweiten Position schwenkbar ist.

## Beschreibung

Die vorliegende Erfindung betrifft eine Vorrichtung zur Aufnahme wenigstens eines Akkumulators an einer Werkzeugmaschine. Bei der Werkzeugmaschine kann es sich beispielsweise um eine Kreissäge oder dergleichen handeln.

Akkumulatoren werden gemäß dem Stand der Technik oftmals an einer Unterseite eines Gehäuses der Werkzeugmaschine befestigt. Die hierzu verwendeten Vorrichtungen zur wiederlösbaren Befestigung des Akkus an der Werkzeugmaschine sind jedoch für gewöhnlich technisch relativ primitiv bzw. einfach gestaltet.

Eine platzsparende und vor allem ergonomische Anordnung des Akkus an der Werkzeugmaschine stellt häufig genug ein großes technisches Problem dar.

Aufgabe der vorliegenden Erfindung ist es daher das vorstehend beschriebene Problem zu lösen und eine verbesserte Vorrichtung zur Aufnahme wenigstens eines Akkumulators an einer Werkzeugmaschine bereitzustellen, die eine platzsparende sowie ergonomische Anordnung des Akkumulators an einer Werkzeugmaschine ermöglicht.

Die Aufgabe wird gelöst durch den Gegenstand des unabhängigen Anspruchs 1. Vorteilhafte Ausführungsformen des erfindungsgemäßen Gegenstands sind in den abhängigen Ansprüchen enthalten.

Die Aufgabe wird dabei gelöst durch das Bereitstellen einer Vorrichtung zur Aufnahme wenigstens eines Akkumulators an einer Werkzeugmaschine, insbesondere eine Kreissäge.

Erfindungsgemäß ist vorgesehen, dass die Vorrichtung eine Aufnahmeplatte zum wiederlösbaren Halten des wenigstens einen Akkumulators mit wenigstens einer Kontakteinrichtung zum Verbinden des Akkumulators mit der Werkzeugmaschine und eine Doppelscharniereinrichtung mit einer ersten und zweiten Drehachse enthält, wobei die erste Drehachse an einem Gehäuse der Werkzeugmaschine und die zweite Drehachse an der Aufnahmeplatte positioniert ist, sodass die Aufnahmeplatte um die erste sowie zweite Drehachse relativ zu dem Gehäuse reversibel zwischen einer ersten und zweiten Position schwenkbar ist.

Gemäß einer vorteilhaften Ausführungsform der vorliegenden Erfindung kann es möglich sein, dass die Aufnahmeplatte einen ersten sowie zweiten Führungsstift enthält und das Gehäuse eine erste sowie zweite Führungsnut enthält, wobei die erste Führungsnut zur Aufnahme und Führung des ersten Führungsstifts und die zweite Führungsnut zur Aufnahme und Führung des zweiten Führungsstifts ausgestaltet ist, sodass die Aufnahmeplatte wenigstens während der Schwenkbewegung zwischen der ersten und zweiten Position geführt ist. Hierdurch kann die sichere Bewegung der Aufnahmeplatte relativ zu dem Gehäuse gewährleistet werden sowie eine übermäßige Belastung der Doppelscharniereinrichtung bei einem Verkanten bzw. Verdrehen der Aufnahmeplatte relativ zu dem Gehäuse verhindert werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: eine erste perspektivische Ansicht einer Werkzeugmaschine mit einem Akku;
- Fig. 2: eine Seitenansicht der Werkzeugmaschine mit dem Akku;
- Fig. 3: eine weitere perspektivische Ansicht der Werkzeugmaschine mit dem Akku;
- Fig. 4: eine weitere perspektivische Ansicht der Werkzeugmaschine mit dem Akku;
- Fig. 5: eine perspektivische Ansicht auf den Akku;
- Fig. 6: eine perspektivische Ansicht auf eine Aufnahmeplatte mit einer Kontakteinrichtung einer erfindungsgemäßen Vorrichtung zur Aufnahme wenigstens eines Akkumulators an einer Werkzeugmaschine;
- Fig. 7: eine weitere perspektivische Ansicht auf die Aufnahmeplatte mit der Kontakteinrichtung der erfindungsgemäßen Vorrichtung zur Aufnahme wenigstens des Akkumulators an der Werkzeugmaschine;
- Fig. 8: eine weitere perspektivische Ansicht auf die Aufnahmeplatte mit der Kontakteinrichtung der erfindungsgemäßen Vorrichtung zur Aufnahme wenigstens des Akkumulators an der Werkzeugmaschine;
- Fig. 9: eine Teilansicht auf ein hinteres Ende der Aufnahmeplatte mit der Kontakteinrichtung;
- Fig. 10: eine weitere Teilansicht auf das hintere Ende der Aufnahmeplatte mit einem Teil der Kontakteinrichtung;
- Fig. 11: eine weitere Teilansicht auf das hintere Ende der Aufnahmeplatte mit einem Teil der Kontakteinrichtung;
- Fig. 12: eine weitere Teilansicht auf das hintere Ende der Aufnahmeplatte mit einem Teil der Kontakteinrichtung;
- Fig. 13: eine Unteransicht auf das hintere Ende der Aufnahmeplatte ohne Kontakteinrichtung;
- Fig. 14: eine weitere Unteransicht auf das hintere Ende der Aufnahmeplatte mit einem Teil der Kontakteinrichtung;
- Fig. 15: eine weitere Teilansicht auf das hintere Ende der Aufnahmeplatte mit einem Teil der Kontakteinrichtung;
- Fig. 16: eine Unteransicht auf die gesamte Aufnahmeplatte mit der Kontakteinrichtung;
- Fig. 17: eine Seitenansicht auf die gesamte Aufnahmeplatte mit der Kontakteinrichtung;
- Fig. 18: eine weitere perspektivische Ansicht auf die Aufnahmeplatte ohne Kontakteinrichtung;
- Fig. 19: eine perspektivische Ansicht auf die Kontakteinrichtung;
- Fig. 20: eine weitere perspektivische Ansicht auf die Kontakteinrichtung;
- Fig. 21: eine weitere perspektivische Ansicht auf die Kontakteinrichtung;
- Fig. 22: eine perspektivische Teilansicht auf ein Gehäuse der Werkzeugmaschine;
- Fig. 23: eine weitere perspektivische Teilansicht auf das Gehäuse der Werkzeugmaschine mit einer Doppelscharniereinrichtung in einer ersten Position;
- Fig. 24: eine weitere perspektivische Teilansicht auf das Gehäuse der Werkzeugmaschine mit einer Doppelscharniereinrichtung in einer ersten Position;
- Fig. 25: eine weitere perspektivische Teilansicht auf das Gehäuse der Werkzeugmaschine mit einer Doppelscharniereinrichtung in einer zweiten Position;
- Fig. 26: eine weitere perspektivische Teilansicht auf das Gehäuse der Werkzeugmaschine mit einer Doppelscharniereinrichtung in einer zweiten Position;
- Fig. 27: eine perspektivische Ansicht auf das Gehäuse der Werkzeugmaschine mit der Aufnahmeplatte in einer ersten Position;
- Fig. 28: eine weitere perspektivische Ansicht auf das Gehäuse der Werkzeugmaschine mit der Aufnahmeplatte in der ersten Position;
- Fig. 29: eine weitere perspektivische Ansicht auf das Gehäuse der Werkzeugmaschine mit der Aufnahmeplatte in der ersten Position;
- Fig. 30: eine weitere perspektivische Ansicht auf das Gehäuse der Werkzeugmaschine mit der Aufnahmeplatte und der Kontakteinrichtung in der ersten Position;
- Fig. 31: eine perspektivische Teilansicht auf das Gehäuse der Werkzeugmaschine mit der Aufnahmeplatte und der Kontakteinrichtung in der ersten Position;
- Fig. 32: eine weitere perspektivische Teilansicht auf das Gehäuse der Werkzeugmaschine mit der Aufnahmeplatte und der Kontakteinrichtung in der ersten Position;
- Fig. 33: eine perspektivische Ansicht auf das Gehäuse der Werkzeugmaschine mit der Aufnahmeplatte und der Kontakteinrichtung in der zweiten Position; und
- Fig. 34: eine perspektivische Ansicht auf das Gehäuse der Werkzeugmaschine mit der Aufnahmeplatte und dem Akku in der zweiten Position.

### Ausführungsbeispiele:

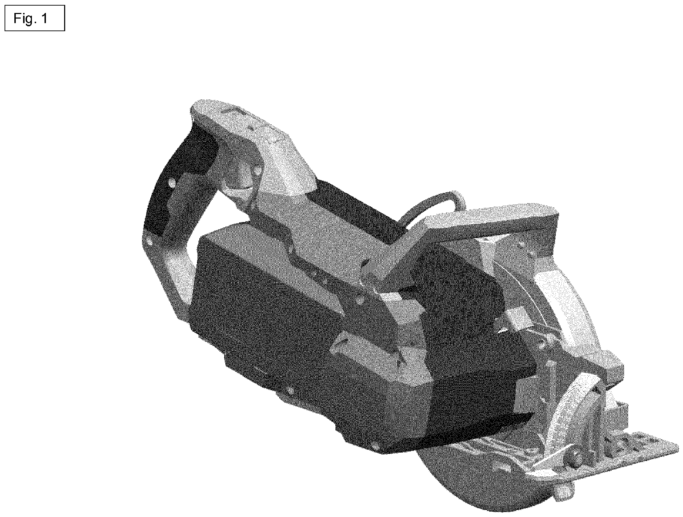

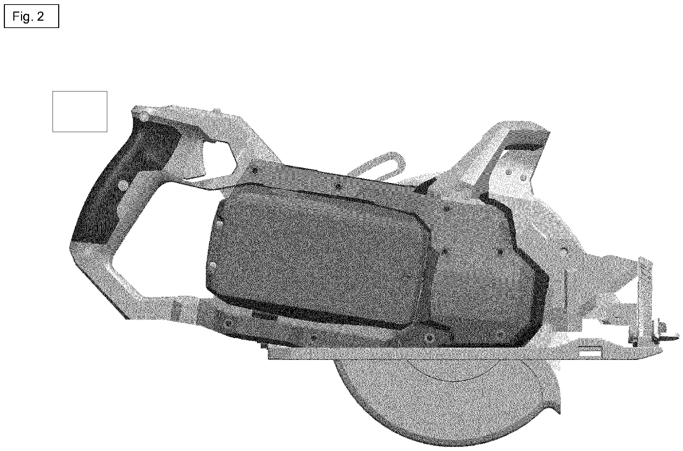

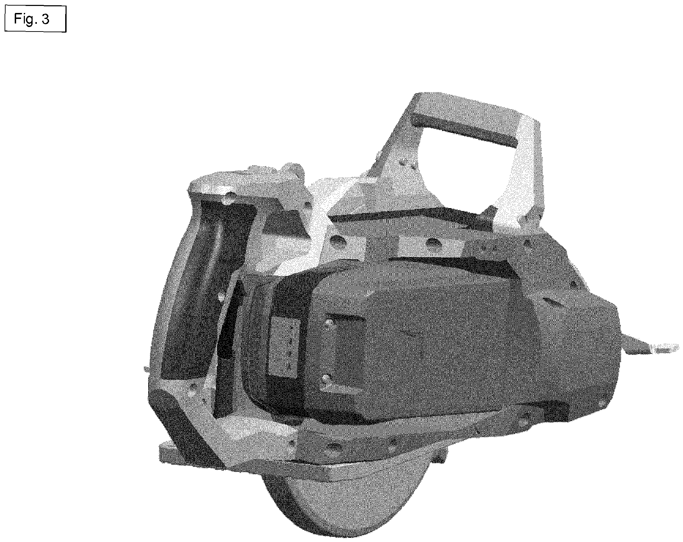

Fig. 1 bis 4 zeigt eine Werkzeugmaschine 1 und eine Vorrichtung 2 zur Aufnahme wenigstens eines Akkumulators 8 an der Werkzeugmaschine 1, insbesondere eine Kreissäge. Es ist jedoch auch möglich, dass es sich um jede andere geeignete Werkzeugmaschine handelt.

Im vorliegenden Ausführungsfall ist die Werkzeugmaschine 1 in Form einer Kreissäge ausgebildet und enthält im Wesentlichen ein Gehäuse 4, einen ersten hinteren Handgriff 5, einen zweiten oberen Handgriff 6 sowie ein Sägeblatt S. An den beiden Handgriffen 5, 6 kann die als Kreissäge ausgestaltete Werkzeugmaschine 1 von einem Anwender geführt werden. Der Anwender ist in den Figuren nicht dargestellt.

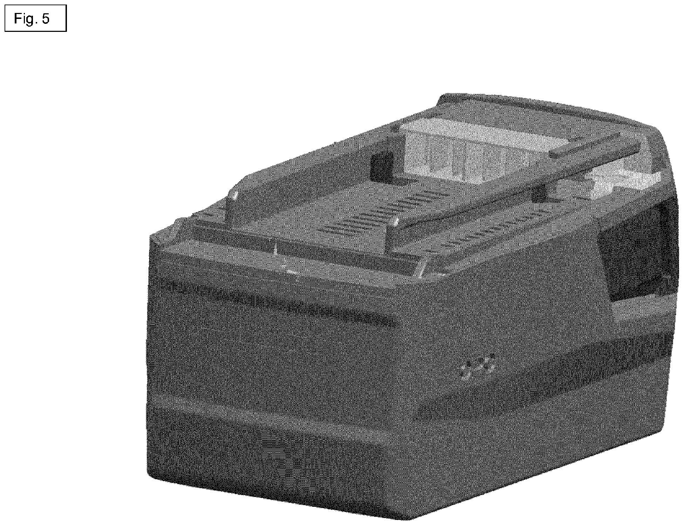

Das Gehäuse 4 weist eine Ausbuchtung 7 auf, in die der Akkumulator 8 (auch Akku genannt) aufgenommen und gehalten werden kann. Die Ausbuchtung 7 kann auch als Aussparung bezeichnet werden. Wie in Fig. 5 gezeigt ist der Akku 8 in Form eines Quaders ausgestaltet. An einer Oberseite 8a sind zwei Schienen 8b, 8c und ein Kontaktelement 8d positioniert. Die Schienen 8b dienen dazu, den Akku 8 an einer entsprechenden Stelle auf die Werkzeugmaschine 1 aufschieben zu können.

Die Vorrichtung 2 zur Aufnahme wenigstens eines Akkumulators 8 an der Werkzeugmaschine 1 enthält im Wesentlichen eine Aufnahmeplatte 9 und eine Doppelscharniereinrichtung 10.

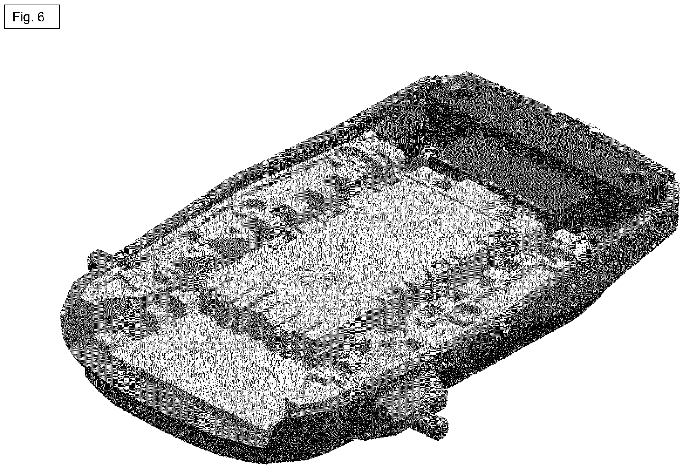

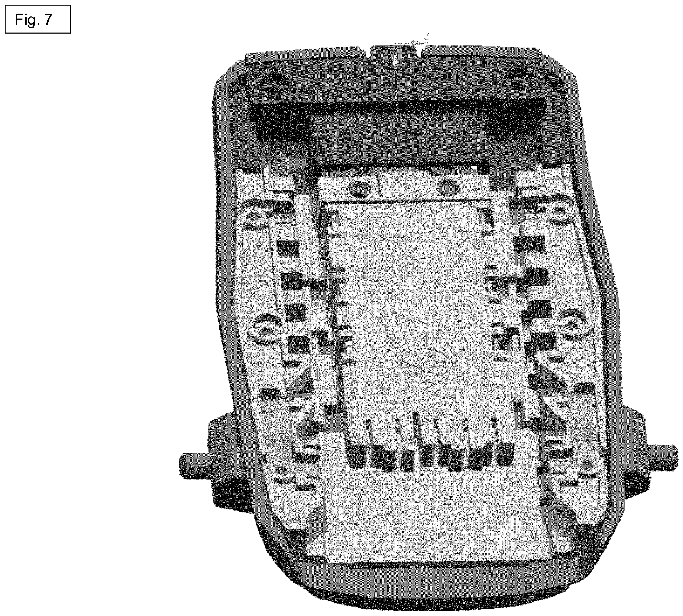

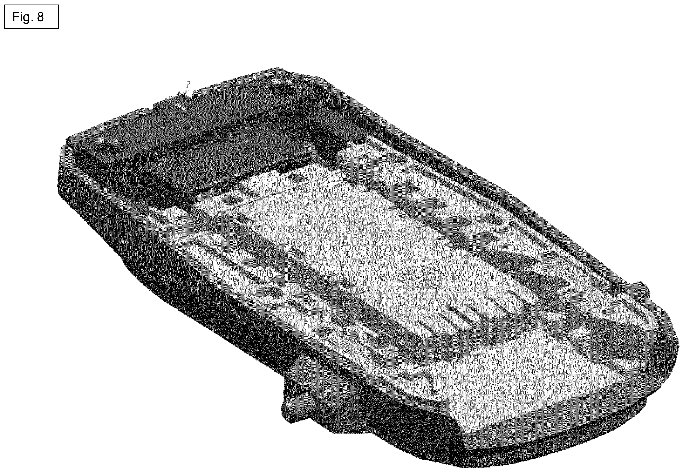

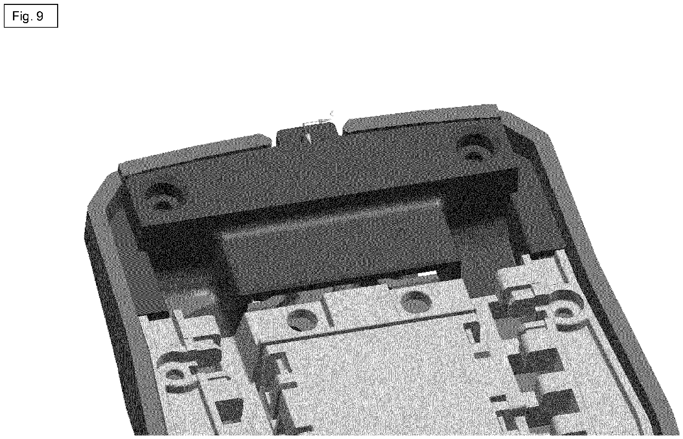

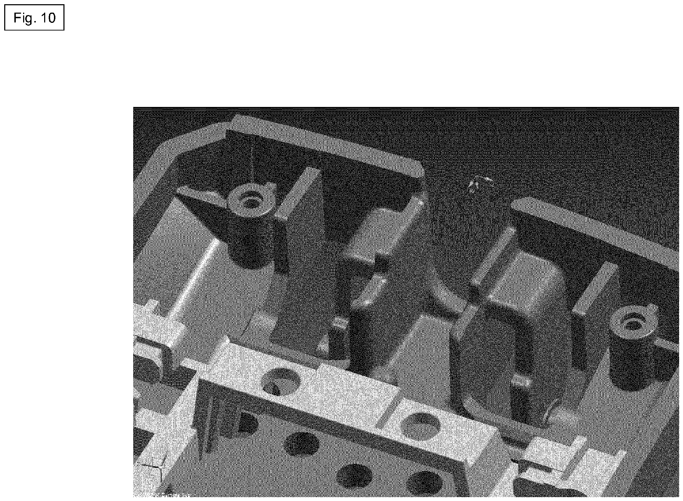

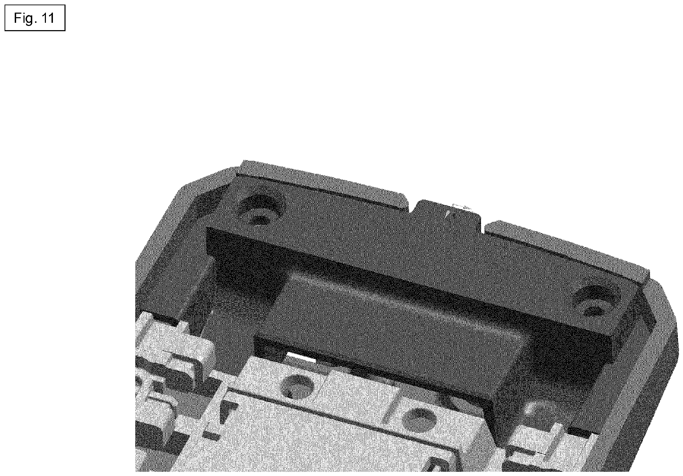

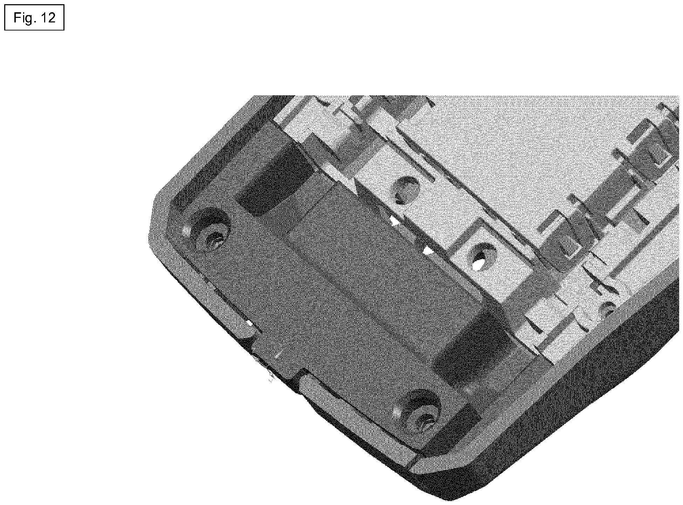

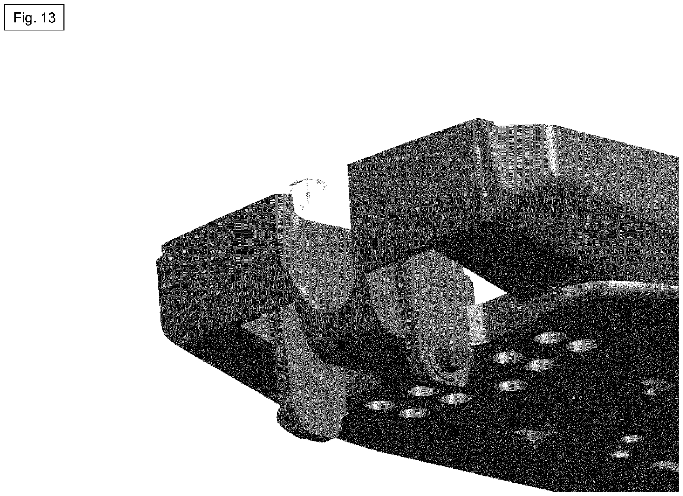

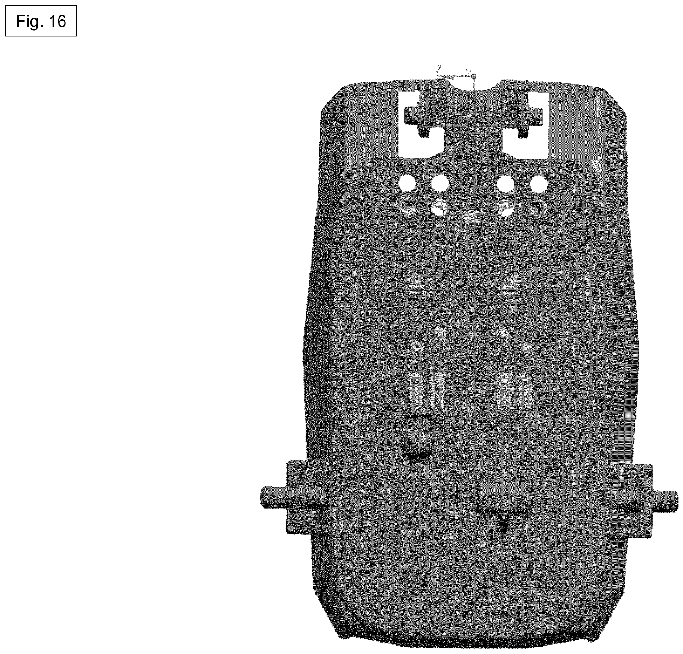

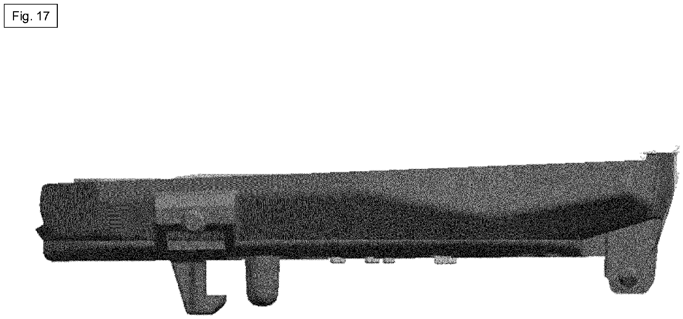

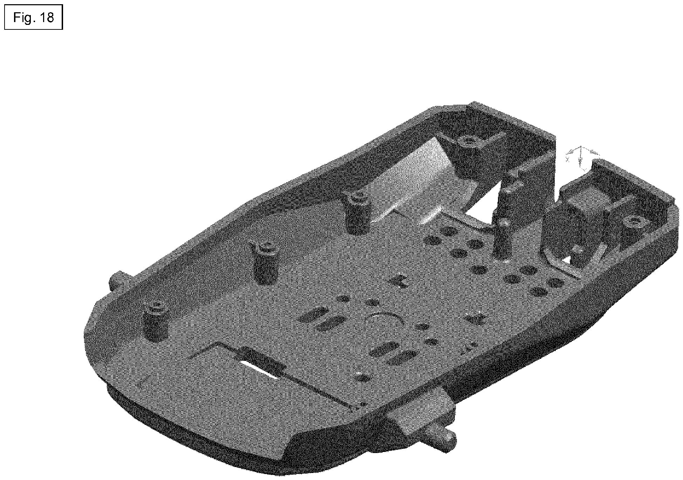

Wie in den Figuren 6 bis 18 dargestellt, ist die Aufnahmeplatte 9 im Wesentlichen in Form einer flachen schalenförmigen Platte ausgestaltet. Die Aufnahmeplatte 9 dient zum wiederlösbaren Halten des Akkus 8 mit der Ausbuchtung 7 der Werkzeugmaschine 1. Die Aufnahmeplatte 9 weist dabei eine Oberseite 9a, eine Unterseite 9b, eine Vorderseite 9c, eine Rückseite 9d, eine erste Seitenwand 9e und eine zweite Seitenwand 9f auf. Des Weiteren ist an der Oberseite 9a der Aufnahmeplatte 9 eine Kontakteinrichtung 11 positioniert.

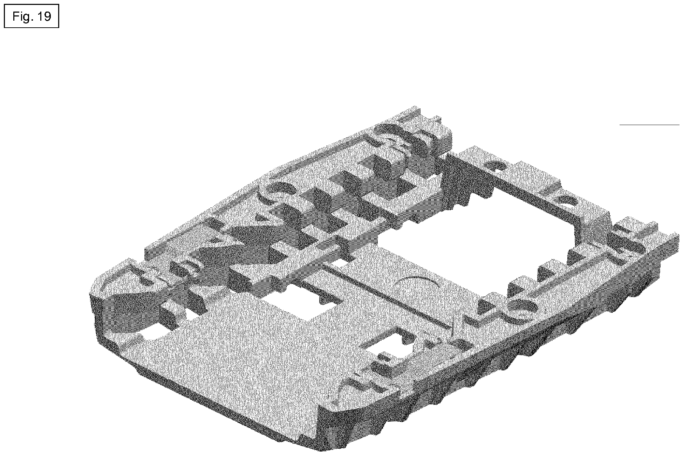

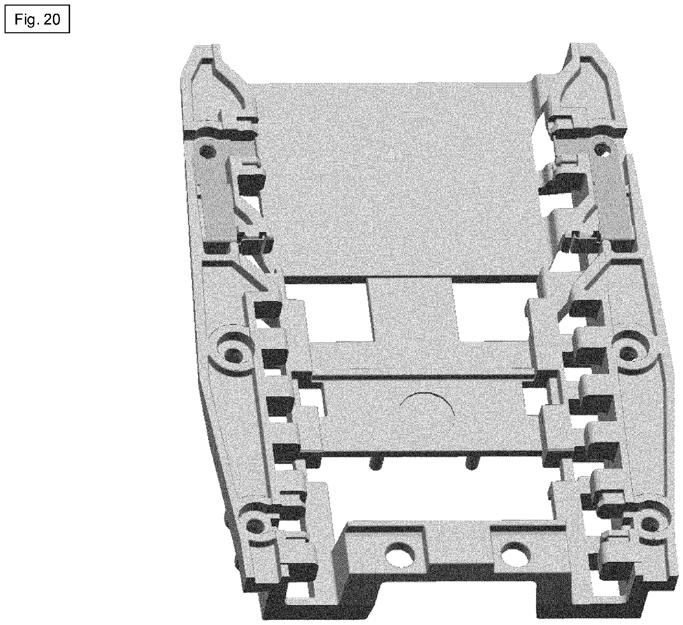

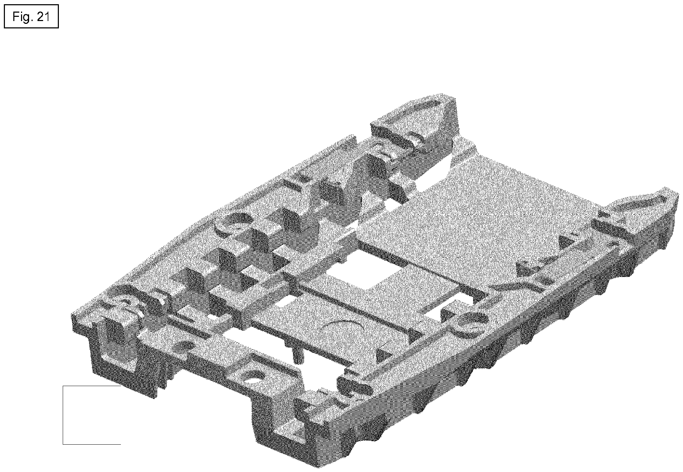

Wie in den Figuren 19 bis 21 gezeigt, ist die Kontakteinrichtung 11 flach ausgebildet und weist zwei Aussparungen 11a, 11 b sowie ein Anschlusselement 11 c auf. In die beiden Aussparungen 11a, 11 b können entsprechend die beiden Schienen 8b, 8c des Akkus 8 eingeschoben werden, sodass der Akku 8 an der Kontakteinrichtung 11 bzw. an der Aufnahmeplatte 9 wiederlösbar befestigt ist. Wenn der Akku 8 auf die Kontakteinrichtung 11 vollständig geschoben ist, steht das Kontaktelement 8d an der Oberseite 8a des Akkus 8 mit dem Anschlusselement 11 c der Kontakteinrichtung 11 in Kontakt. Die Kontakteinrichtung 11 weist dabei sowohl mechanische als auch elektrische Kontaktelemente auf.

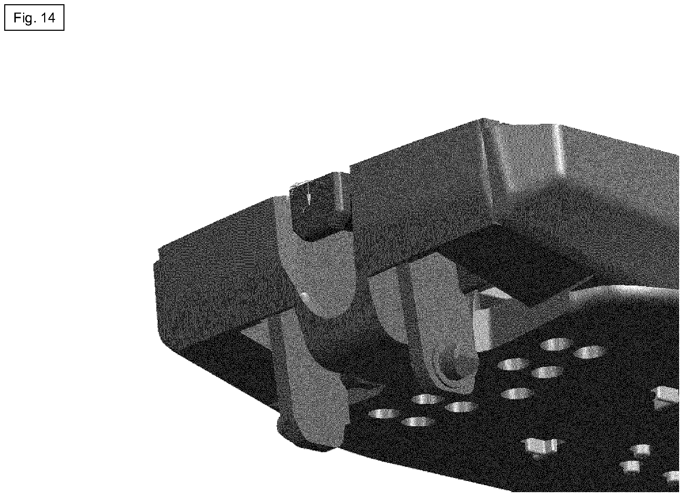

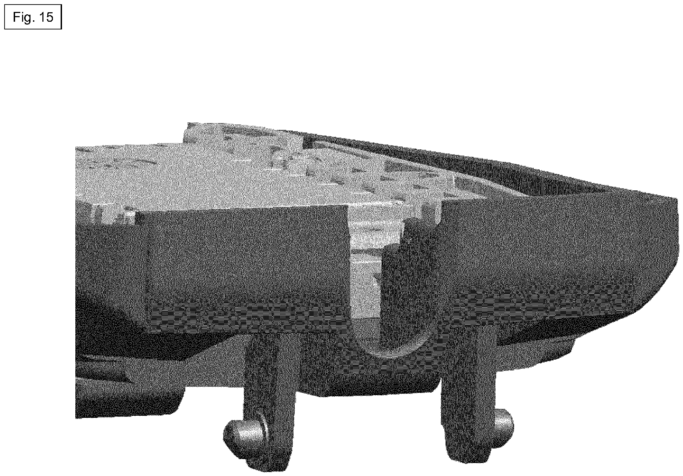

Darüber hinaus enthält die Aufnahmeplatte 9 einen ersten sowie zweiten Führungsstift 12, 13 (vgl. Fig. 6). Der erste Führungsstift 12 ist an der ersten Seitenwand 9e und der zweite Führungsstift 13 ist an der zweiten Seitenwand 9f positioniert. Sowohl der erste als auch der zweite Führungsstift 12, 13 erstreckt sich in derselben Ebene wie die flache schalenförmige Platte der Aufnahmeplatte 9 bzw. wie die Kontakteinrichtung 11 (vgl. Fig. 6 bis 9). Des Weiteren enthält die Aufnahmeplatte 9 an der Unterseite 9b einen dritten und vierten Führungsstift 14, 15. Der dritte Führungsstift 14 ist an einem Ende eines ersten Stegs 16 und der vierte Führungsstift 15 ist an einem Ende eines zweiten Stegs 17 positioniert. Der erste und zweite Steg 16, 17 verlaufen in einer Ebene senkrecht zu der Ebene der Aufnahmeplatte 9 bzw. der Kontakteinrichtung 11 (vgl. Fig. 14 und 15).

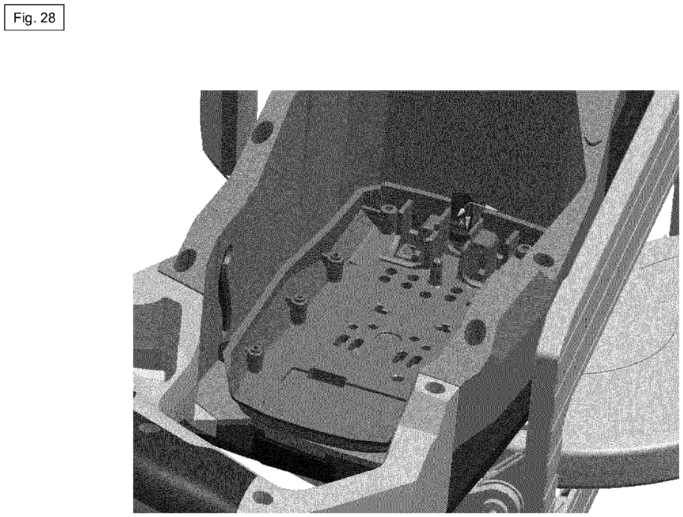

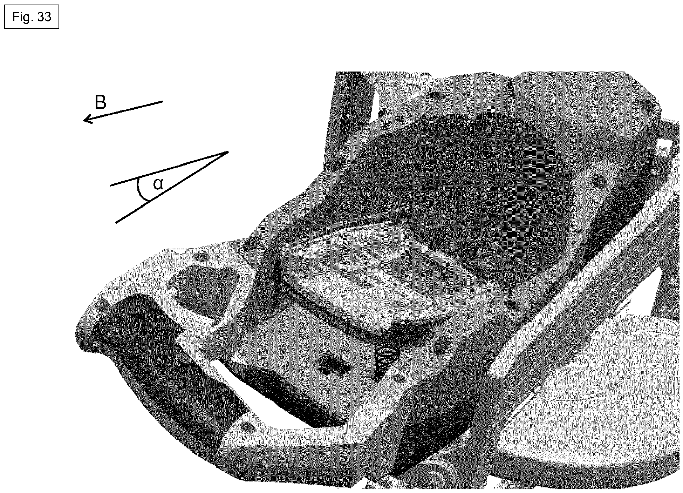

Wie bereits vorstehend erwähnt weist das Gehäuse 4 der Werkzeugmaschine 1 eine Ausbuchtung 7 auf, in die der Akku 8 mit Hilfe der Aufnahmeplatte 9 aufgenommen und gehalten werden kann. Wie nachfolgend ausführlicher beschrieben kann die Aufnahmeplatte 9 relativ zu der Ausbuchtung 7 reversibel zwischen einer ersten und zweiten Position geschwenkt werden. Fig. 28 zeigt beispielsweise die Aufnahmeplatte 9 in der ersten Position und Fig. 33 stellt die Aufnahmeplatte 9 in der zweiten Position dar.

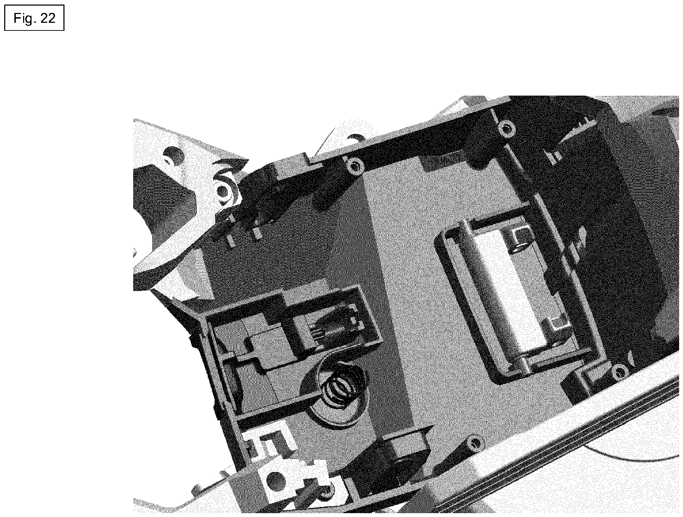

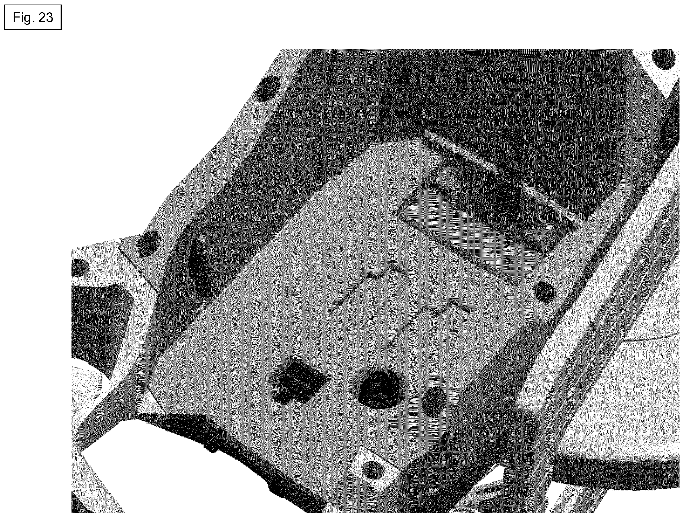

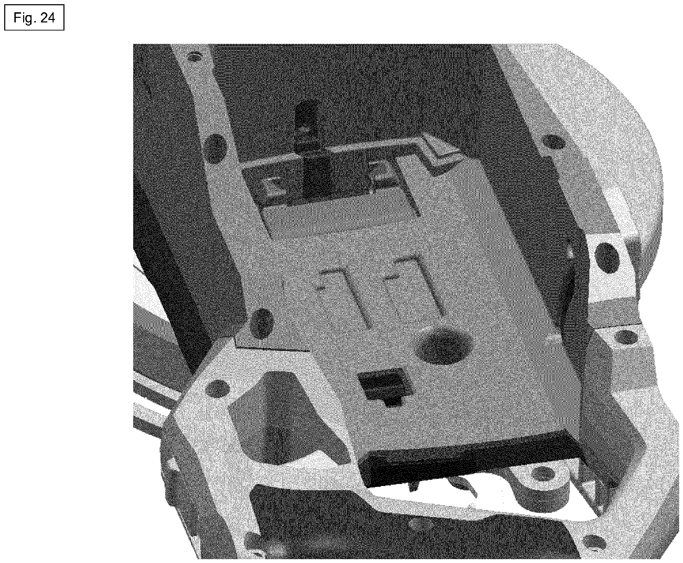

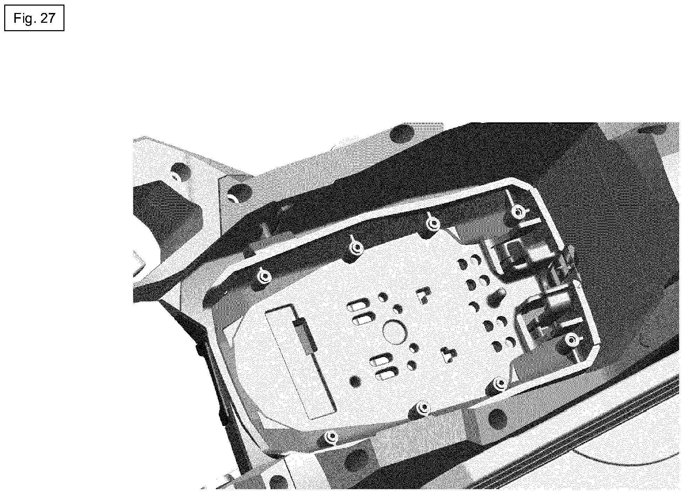

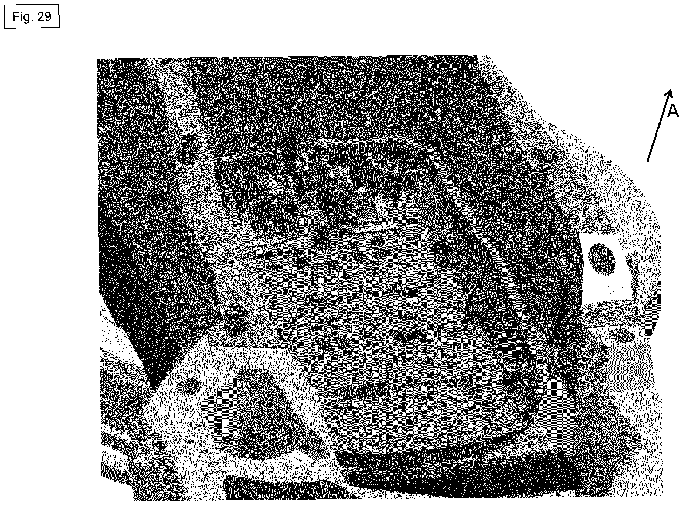

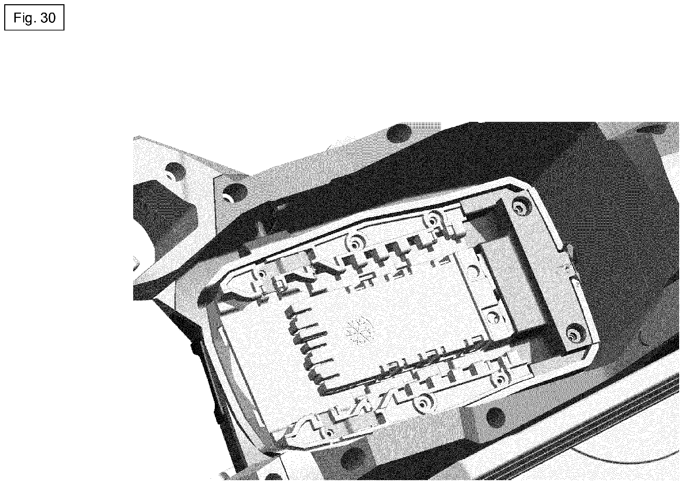

Die Ausbuchtung 7 enthält im Wesentlichen eine erste Seitenwand 7a, eine zweite Seitenwand 7b, einen Boden 7c und eine Rückwand 7d (vgl. Fig. 22 bis 30). Die Ausbuchtung 7 nimmt den Akku 8 in sich auf, in dem die Aufnahmeplatte 9 in der Ausbuchtung 7 positioniert wird und der Akku 8 auf die Aufnahmeplatte 9 geschoben ist. Die Ausbuchtung 7 ist so dimensioniert, dass die Aufnahmeplatte 9 und wenigstens ein Teil des Akkus 8 aufgenommen werden kann. Der Boden 7c der Ausbuchtung 7 ist dabei parallel zu Ober- bzw. Unterseite 9a, 9b der Aufnahmeplatte 9, wenn sich die Aufnahmeplatte 9 in der ersten Position befindet. In der ersten Position ist die Aufnahmeplatte 9 auch parallel zu dem Sägeblatt S (vgl. Fig. 27 und 28). Die erste Seitenwand 7a der Ausbuchtung 7 enthält eine erste Führungsnut 18 und die zweite Seitenwand 7b der Ausbuchtung 7 enthält eine zweite Führungsnut 19. Die erste Führungsnut 18 ist zur Aufnahme und Führung des ersten Führungsstifts 12 und die zweite Führungsnut 19 ist zur Aufnahme und Führung des zweiten Führungsstifts 13 ausgestaltet. Sowohl die erste als auch die zweite Führungsnut 18, 19 weisen einen leichten S-förmigen Verlauf auf.

Des Weiteren enthält die Ausbuchtung 7 an einem Ende des Bodens eine Aussparung 20, in der ein Verbindungselement 21 der Doppelscharniereinrichtung 10 positioniert ist. Die Doppelscharniereinrichtung 10 enthält eine erste und zweite Drehachse A, B, wobei die erste Drehachse A an einem Gehäuse 4 der Werkzeugmaschine 1 und die zweite Drehachse B an der Aufnahmeplatte 9 positioniert ist, sodass die Aufnahmeplatte 9 um die erste sowie zweite Drehachse A, B relativ zu dem Gehäuse 4 reversibel zwischen einer ersten und zweiten Position schwenkbar ist.

Das Verbindungselement 21 weist ein erstes und zweites Drehlager 22, 23 zur entsprechenden Aufnahme des dritten und vierten Führungsstifts 14, 15 der Aufnahmeplatte 9 auf.

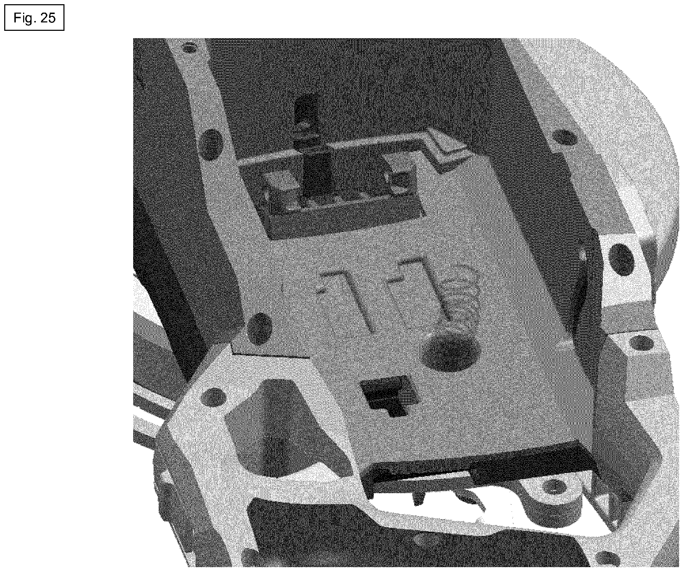

Wie in Fig. 22 zu erkennen ist, befindet sich die erste Drehachse A an dem Boden 7c der Ausbuchtung 7, sodass das Verbindungselement 21 relativ zu dem Boden 7c der Ausbuchtung 7 zwischen der ersten und zweiten Position geschwenkt werden kann (vgl. Fig. 22 und 25), durch gebildet.

Die zweite Drehachse B ist durch das erste und zweite Drehlager 22, 23 sowie durch den dritten und vierten Führungsstift 14, 15 gebildet. Das Verbindungselement 21 und die Aufnahmeplatte 9 können durch die zweite Drehachse B relativ zueinander geschwenkt werden.

In den Figuren 22 bis 24 ist das Verbindungselement 21 der Doppelscharniereinrichtung 10 in der ersten Position dargestellt. In der ersten Position liegt das Verbindungselement 21 flach an dem Boden 7c der Ausbuchtung 7 an und füllt die Aussparung 20 an dem Boden 7c der Ausbuchtung 7 nahezu aus.

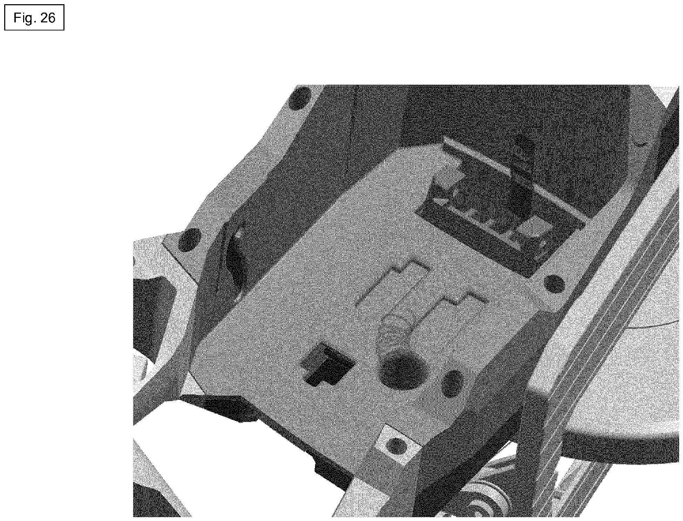

In den Figuren 25 und 26 ist das Verbindungselement 21 der Doppelscharniereinrichtung 10 in der zweiten Position dargestellt. In der zweiten Position ist das Verbindungselement 21 im Wesentlichen senkrecht zu dem Boden 7c der Ausbuchtung 7 angeordnet und erstreckt sich aus der Aussparung 20 an dem Boden 7c der Ausbuchtung 7 heraus.

Des Weiteren enthält die Ausbuchtung 7 eine Feder und ein Verschlussmechanismus 25. Wie in Figuren 22 bis 26 gezeigt, ist die Feder 24 in Form einer Spiralfeder ausgestaltet und erstreckt sich von dem Boden 7c der Ausbuchtung 7. Wenn die Aufnahmeplatte 9 in der Ausbuchtung 7 positioniert ist, befindet sich die Feder 24 zwischen dem Boden 7c der Ausbuchtung 7 der Unterseite 9b der Aufnahmeplatte 9. Die Federkraft der Feder 24 drückt dabei die Aufnahmeplatte 9 in Pfeilrichtung A von dem Boden 7c der Ausbuchtung 7 weg.

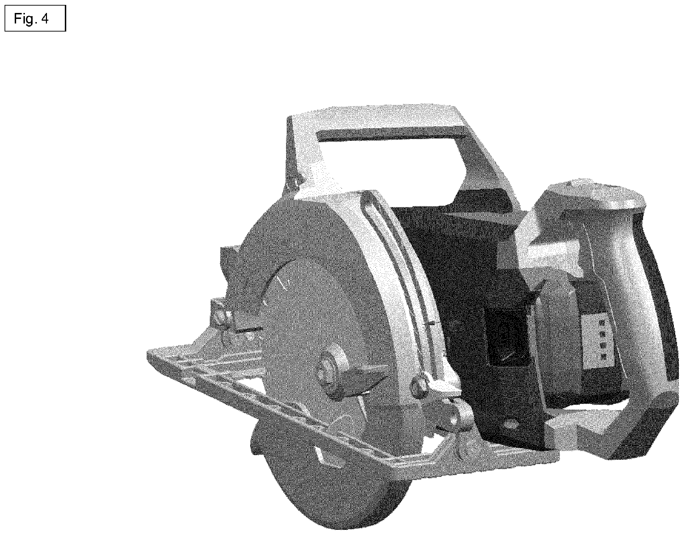

Der Verschlussmechanismus 25 ist ebenfalls an dem Boden 7c der Ausbuchtung 7 positioniert und dient dazu, die Aufnahmeplatte 9 gegen die Federkraft der Feder 24 an dem Boden 7c der Ausbuchtung 7 und in der ersten Position zu halten. Ein Auslöseelement 26 für den Verschlussmechanismus 25 ist in Fig. 4 und 22 dargestellt.

Wie bereits vorstehen erwähnt kann die Aufnahmeplatte 9 relativ zu der Ausbuchtung 7 reversibel zwischen einer ersten und zweiten Position bewegt werden. Wenn sich die Aufnahmeplatte 9 zusammen mit der Kontakteinrichtung 11 in der ersten Position befindet und der Akku 8 auf die Kontakteinrichtung 11 geschoben ist, liegt die Aufnahmeplatte 9 parallel an dem Boden 7c der Ausbuchtung 7 an und der Akku 8 ist platzsparend und ergonomisch mit der als Kreissäge ausgestalteten Werkzeugmaschine 1 verbunden.

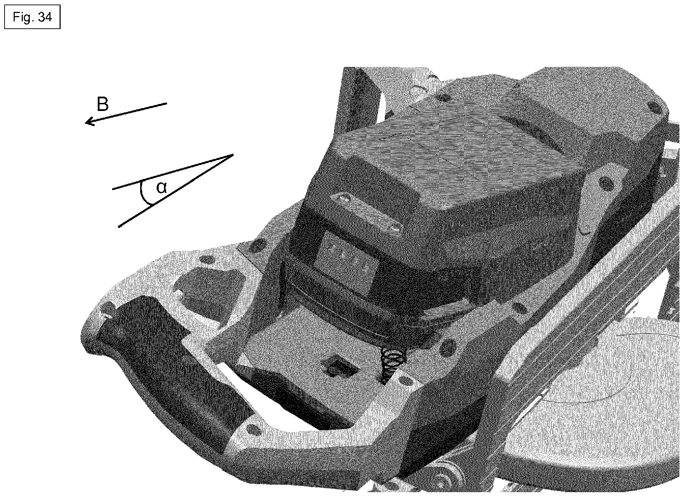

Wenn sich die Aufnahmeplatte 9 zusammen mit der Kontakteinrichtung 11 in der zweiten Position befindet und der Akku 8 auf die Kontakteinrichtung 11 geschoben ist, steht die Aufnahmeplatte 9 in einem Winkel α zu dem Boden 7c der Ausbuchtung 7 (vgl. Fig. 33 und 34). In der zweiten Position kann der Akku 8 an dem ersten hinteren Handgriff 5 vorbei und in Pfeilrichtung B aus der Kontakteinrichtung 11 bzw. von der Aufnahmeplatte 9 gezogen werden. Die zweite Position dient auch dazu einen Akku 8 in die Kontakteinrichtung 11 bzw. auf der Aufnahmeplatte 9 zu schieben, um diesen als Energiequelle mit der Werkzeugmaschine 1 zu verbinden.

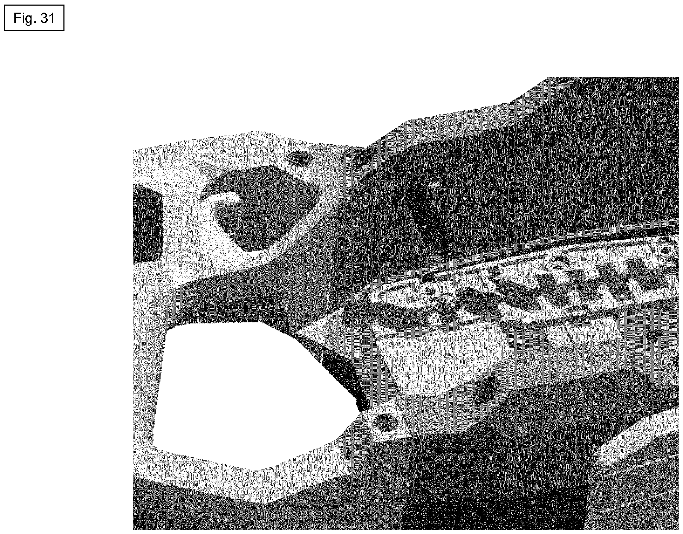

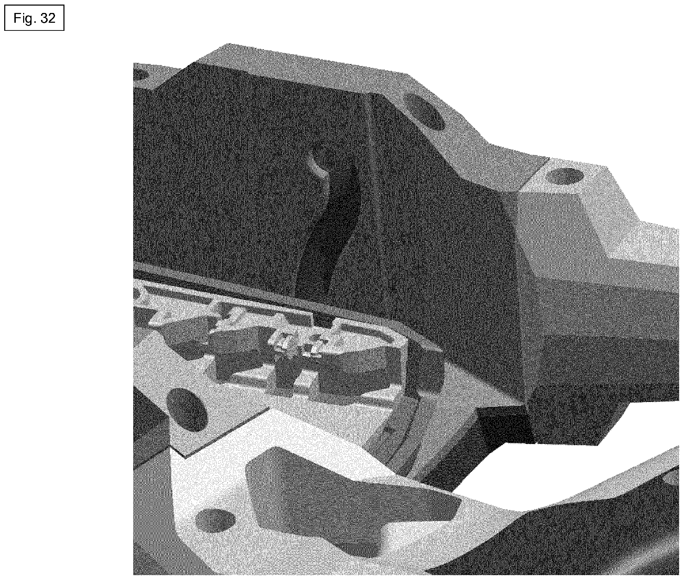

Damit die Ausnahmeplatte 9 relativ zu der Ausbuchtung 7 zwischen der ersten und zweiten Position geschwenkt werden kann, ist der dritte Führungsstift 14 der Aufnahmeplatte 9 in dem ersten Drehlager 22 des Verbindungselements 21 und der vierte Führungsstift 15 der Aufnahmeplatte 9 in dem zweiten Drehlager 23 des Verbindungselements 21 der Doppelscharniereinrichtung 10 positioniert. Der ersten Führungsstift 12 ist dabei in der ersten Führungsnut 18 und der zweite Führungsstift 13 ist dabei in der zweiten Führungsnut 19 positioniert (vgl. Fig. 27 bis 32).

Wenn die Aufnahmeplatte 9 von der ersten Position zu der ersten Position schwenkt, fährt der erste Führungsstift 12 entlang der ersten Führungsnut 18 und der zweite Führungsstift 13 fährt entlang der zweiten Führungsnut 19. Die Doppelscharniereinrichtung 10 bewirkt, dass die Aufnahmeplatte 9 besonders platzsparend um die erste und zweite Drehachse A, B geschwenkt werden kann.

## Patentansprüche

1. Vorrichtung (2) zur Aufnahme wenigstens eines Akkumulators (8) an einer Werkzeugmaschine (1), insbesondere eine Kreissäge,
**gekennzeichnet durch**
- eine Aufnahmeplatte (9) zum wiederlösbaren Halten des wenigstens einen Akkumulators (8) mit wenigstens einer Kontakteinrichtung (11) zum Verbinden des Akkumulators (8) mit der Werkzeugmaschine (1); und
- eine Doppelscharniereinrichtung (10) mit einer ersten und zweiten Drehachse (A, B), wobei die erste Drehachse (A) an einem Gehäuse (4) der Werkzeugmaschine (1) und die zweite Drehachse (B) an der Aufnahmeplatte (9) positioniert ist, sodass die Aufnahmeplatte (9) um die erste sowie zweite Drehachse (A, B) relativ zu dem Gehäuse (4) reversibel zwischen einer ersten und zweiten Position schwenkbar ist.

2. Vorrichtung (2) nach Anspruch 1,
**dadurch gekennzeichnet, dass** die Aufnahmeplatte (9) einen ersten sowie zweiten Führungsstift (12, 13) enthält und das Gehäuse (4) eine erste sowie zweite Führungsnut (18, 19) enthält, wobei die erste Führungsnut (18) zur Aufnahme und Führung des ersten Führungsstifts (12) und die zweite Führungsnut (19) zur Aufnahme und Führung des zweiten Führungsstifts (13) ausgestaltet ist, sodass die Aufnahmeplatte (9) wenigstens während der Schwenkbewegung zwischen der ersten und zweiten Position geführt ist.
